Europäisches Patentamt

(19) European Patent Office

Office européen des brevets

(11) Numéro de publication: **0 028 991**
**B1**

(12) **FASCICULE DE BREVET EUROPEEN**

(45) Date de publication du fascicule du brevet:
06.04.83

(51) Int. Cl.³: **B 60 D 1/06**

(21) Numéro de dépôt: 80420115.0

(22) Date de dépôt: 24.10.80

(54) Support d'attelage pour véhicules, notamment automobiles.

(30) Priorité: 07.11.79 FR 7928135

(43) Date de publication de la demande:
20.05.81 Bulletin 81/20

(45) Mention de la délivrance du brevet:
06.04.83 Bulletin 83/14

(84) Etats contractants désignés:
AT BE CH DE GB IT LI NL SE

(56) Documents cités:
EP-A-0 006 675
FR-A-783 461
FR-A-2 282 348
GB-A-538 166
GB-A-717 125
US-A-2 743 943
US-A-2 878 036

(73) Titulaire: Tunesi, Société Anonyme :, B. P. 821 25, rue
Edouard Girerd, F-38200 Vienne (FR)

(72) Inventeur: Allain, Gabriel, La Vabreille, F-30520 St Martin
de Valgualgues (FR)

(74) Mandataire: Ropital-Bonvarlet, Claude et al, Cabinet
BEAU DE LOMENIE 99, Grande rue de la Guillotière,
F-69007 Lyon (FR)

ACTORUM AG

## Support d'attelage pour véhicules, notamment automobiles.

La présente invention est relative aux supports d'attelage adaptés sur les véhicules, notamment automobiles, pour permettre la liaison et l'attelage avec la partie complémentaire d'un véhicule tracté, notamment d'une remorque.

Pour assumer la fonction ci-dessus, il est courant d'utiliser des structures rigides qui sont adaptées rigidement sur la caisse, le châssis ou la coque d'un véhicule tracteur, de manière à présenter, à l'extérieur ou hors gabarit dudit véhicule, un système de jonction sur lequel peut s'adapter une contrepartie complémentaire présentée par le véhicule à tracter. En général, les moyens mis en œuvre pour établir la jonction entre les parties complémentaires forment un système d'articulation à point unique, par exemple du type à rotule, à œil, à crochet, à cardan etc ...

En raison de ce point de jonction unique, il en résulte, lors de la traction, une concentration des efforts en charge, lesquels donnent naissance à un couple résultant qui est appliqué aux points d'ancrage ou de liaison entre la structure rigide du système d'attelage et le véhicule tracteur.

Cependant, le couple résultant n'est pas d'intensité, ni de direction constante puisqu'il résulte des variations des efforts alternés provenant des modifications de condition de traction et s'exerçant entre le véhicule tracteur et le véhicule tracté, dans la direction de traction mais aussi dans le plan vertical passant par cette direction. Ces efforts alternés ont pour effet de fatiguer la structure et les points d'ancrage au point d'être responsables de ruptures intempestives provoquant des accidents en survenant pendant la traction.

Il faut noter également que ces efforts alternés ont pour effet de modifier constamment les conditions de conduite par la variation de charge appliquée au point de jonction unique. Ces variations de charge rendent la conduite difficile, parfois dangereuse et en tous cas fatiguante, car le conducteur doit compenser en permanence des phénomènes induits, tels que la variation d'assiette avec allègement de la direction, la variation et l'inversion de répartition de charge du véhicule tracteur, etc ...

Pour tenter de réduire les inconvénients ci-dessus, des attelages possédant des moyens d'amortissement des efforts alternés ont été proposés. Parmi ceux-ci il faut citer la réalisation selon le brevet GB-A-538 166 selon laquelle le véhicule tracteur possède une pièce tubulaire orientée parallèlement à l'axe de traction et reliée à une tige axiale par une garniture en caoutchouc vulcanisée à la fois sur la tige et dans la pièce tubulaire. La tige est munie, à l'extérieur de la pièce tubulaire, de deux tourillons d'axe horizontal engagés dans deux garnitures élastiques portées par le véhicule tracté.

Si la présence de deux ensemble déformables élastiquement peut apparaître favorable, en réalité, un tel dispositif ne répond pas positivement au problème posé, car la tige est sollicitée en déplacements verticaux alternés combinés aux coulissements axiaux. La garniture dans le tube est alors contrainte radialement et travaille dans des conditions nuisant à sa longévité essentiellement calculée en fonction d'un travail de compression allongement axial.

En outre, une telle réalisation accroît notablement la longueur du bras de levier entre l'essieu arrière du véhicule tracteur et le point d'application des efforts de traction, ce qui n'est pas favorable à l'obtention de bonnes conditions de conduite.

Il faut noter, également, qu'une telle réalisation est d'un attelage peu pratique et laisse en permanence subsister sur le véhicule tracteur une prohéminence importante gênante pour les utilisateurs.

La présente invention vise justement à remédier à ces inconvénients connus des dispositifs d'attelage actuels en proposant un nouveau support tout particulièrement conçu pour amortir les variations des efforts alternés naissant lors de la traction, de manière à réduire les contraintes appliquées aux points d'ancrage entre le véhicule tracteur et le dispositif d'attelage, et aussi à améliorer notablement les conditions de conduite du véhicule tracteur.

Un autre objet de l'invention est de réaliser un transfert du point d'application des efforts en direction de la partie antérieure du véhicule tracteur, de manière à réduire le bras de levier existant entre l'essieu arrière et le point d'application des efforts de traction. Cette disposition permet de réduire dans la proportion correspondante le couple de traction appliqué et, par suite, de conférer des meilleures caractéristiques de conduite en procurant une stabilité accrue et une meilleure répartition de charge au véhicule tracteur.

Un autre objet de l'invention est de faire en sorte que cette caractéristique de réduction du bras de levier ou porte-à-faux soit acquise dans le cas d'attelage simple ou encore aussi d'attelage combiné avec un système de stabilisation par effet de répartition de charges verticale et latérale.

Un autre objet de l'invention est de conférer du dispositif ou support d'attelage une caractéristique supplémentaire de démontabilité rapide, pratique et aisée à mettre en œuvre, de manière que, supplémentairement, il soit possible de supprimer à volonté la partie du support d'attelage s'étendant normalement hors du gabarit du véhicule tracteur. Cette caractéristique est particulièrement appréciable lorsque le véhicule tracteur est utilisé seul, car elle permet de supprimer les risques d'accidents corporels ou matériels qui résultent fréquemment de la présence en saillie, parfois difficilement discernable, de cette partie normalement réservée à l'attelage avec la partie complémentaire d'un véhicule à tracter.

Un autre objet encore de l'invention réside dans le fait que la conception du support d'attelage permet d'envisager l'adaptation de tout dispositif de jonction sur un même support, ainsi que la liaison avec un dispositif de stabilisation par répartition de charges verticale et latérale.

Un autre objet encore de l'invention est de permettre par sa constitution propre, toutes les possibilités d'adaptation sur la carrosserie, la coque, le châssis ou autre élément de structure d'un véhicule tracteur en fonction des caractéristiques ou possibilités offertes par la conception de ce dernier.

Conformément à l'invention, le support d'attelage pour véhicule, notamment automobile, est caractérisé en ce que:

— le pivot est formé par une broche montée, par ses parties terminales, dans des paliers du corps d'adaptation et engagée, par sa partie médiane, dans une garniture cylindrique, déformable élastiquement, occupant un logement présenté par le corps de support,

— l'emboîtement est constitué par un tenon, prolongeant le corps de support à l'opposé du corps de jonction et engagé à l'intérieur d'une garniture déformable élastiquement occupant un logement présenté par le corps d'adaptation.

Diverses autres avantages ressort de la decription ci-dessous faite en référence aux dessins annexés qui montrent, à titre d'exemples non limitatifs, des formes de réalisation de l'objet de l'invention.

La fig. 1 est une coupe-élévation en partie arrachée du dispositif d'attelage conforme à l'invention.

La fig. 2 est une vue transversale prise selon la ligne II–II de la fig. 1.

La fig. 3 est une vue en plan, partie en coupe, prise selon la ligne III–III de la fig. 1.

La fig. 4 est une élévation partielle montrant, à plus petite échelle, une variante de réalisation de l'objet de l'invention.

La fig. 5 est un schéma montrant un avantage de l'objet de l'invention.

La fig. 6 est une vue en plan illustrant une autre forme d'exécution de l'objet de l'invention.

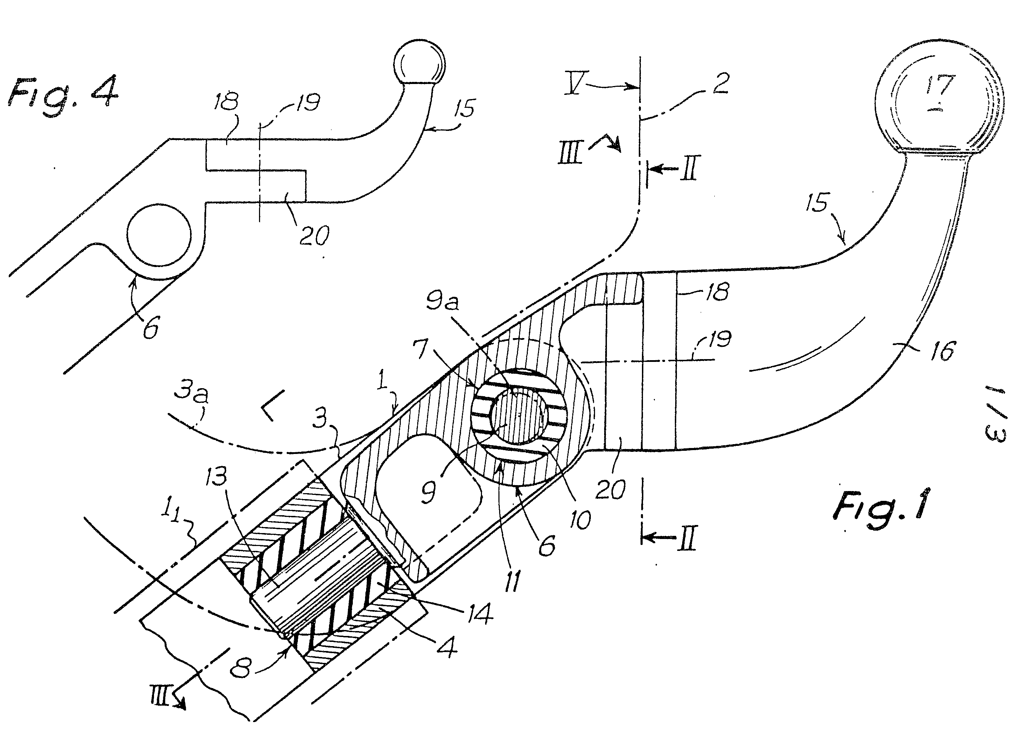

Selon l'exemple de réalisation illustré par les fig. 1 à 3, le support d'attelage comprend tout d'abord un corps 1 d'adaptation sur la structure 2, représentée en pointillé, d'un véhicule tracteur notamment d'un véhicule automobile V. La structure 2 peut être constituée par la caisse, la carrosserie, le châssis, la coque, le bouclier arrière ou autre élément du véhicule V sur lequel le corps d'adaptation 1 est fixé de toute manière appropriée de façon définitive ou temporaire par l'intermédiaire de boulons, notamment.

Le corps d'adaptation 1 est, de préférence, constitué par deux flasques 3 parallèles qui peuvent être rendus solidaires d'une traverse non représentée ou de deux demi-bras conformés pour permettre une adaptation en des points d'ancrage propres à un type de véhicule donné. Les flasques 3 peuvent être rectilignes, comme illustré, ou éventuellement aussi présenter une conformation 3a, comme montré en pointillés, lorsque le plan des points d'ancrage est situé notablement au-dessus de la conformation extrême basse de la structure 2 du véhicule.

Dans tous les cas de conformation, les flasques 3 sont maintenus parallèlement entre eux et reliés rigidement au moins par les moyens de liaison aux points d'ancrage, mais aussi par au moins une entretoise 4 fixée, notamment par soudure, et située en retrait de deux paliers extrêmes 5 pratiqués de façon co-axiale dans les parties terminales des flasques 3. Dans tous les cas, le montage ou la disposition initiale des flasques 3 est prévue sur le véhicule tracteur 2, de façon que l'axe commun des paliers 5 soit situé horizontalement.

Selon une variante de réalisation illustrée en traits mixtes à la fig. 1, il peut être envisagé de réaliser le corps 1 sous la forme d'un boîtier du type tubulaire 11, qui serait découpé de manière à délimiter deux ailes extrêmes parallèles équivalentes aux flasques 3 et délimitant dans leurs parties extrêmes les paliers 5. Dans un tel exemple de réalisation, l'entretoise 4 peut être supprimée ou maintenue aussi pour des raisons qui ressortent de ce qui suit.

Le support d'attelage comprend également un corps de support 6 conformé de manière à pouvoir être disposé entre les faces internes en regard des ailes ou flasques parallèles 3 dans la partie de ces dernièrs comprise entre les paliers 5 et l'entretoise 4. Selon l'invention, la liaison entre le corps de support 6 et le corps d'adaptation 1 est assurée par deux points 7 et 8 déformables élastiquement. Le point 7 est constitué sous la forme d'un pivot et fait intervenir une broche 9 amenée à traverser une garniture 10, déformable élastiquement, disposée dans un logement 11 présenté par le corps de support 6. La garniture 10 affecte, de préférence, une forme cylindrique tubulaire pour représenter, en quelque sorte, un coussinet pouvant être soumis à des sollicitations en déformation élastique d'orientation radiale par déplacement relatif de la broche 9 par rapport à l'axe géométrique de la garniture 11. Les parties terminales de la broche 9 forment des portées cylindriques destinées à coopérer avec les paliers 5 au niveau desquels la broche 9 est immobilisée axialement par des arrêts 12 de toute forme convenable. En particulier, à titre d'exemple, les butées 12 peuvent être constituées, l'une, par une tête directement formée par la broche 9 et, l'autre, par exemple, par un écrou associé à un dispositif frein.

Le point 8 est constitué par un emboîtement, déformable élastiquement, constitué par un tenon cylindrique 13 formé par le corps de support 6 pour s'étendre selon une direction perpendiculaire à l'axe géométrique du logement 11. Le tenon 13 est, dans l'exemple illustré, aligné avec l'axe général du corps de support 6. Le tenon 13 est destiné à coopérer avec une garniture élastique 14 qui est maintenue en place à l'intérieur de l'entretoise 4, dans le cas de réalisation du corps d'adaptation 1 par l'intermédiaire de deux flasques 3. Dans le cas où le corps 1 est constitué par un boîtier tubulaire, la garniture 14 peut être maintenue en place directement par ledit boîtier ou par un organe intermédiaire, tel qu'une entretoise rapportée. La garniture 14 est constituée par une enveloppe cylindrique entourant concentriquement le tourillon 13.

Ainsi que cela ressort de ce qui précède, le corps de support 6 est monté dans le corps d'adaptation à la manière d'un levier susceptible de pivoter sur la broche 9, un tel levier étant maintenu angulairement par un point de liaison déformable représentant, en quelque sorte, un limitateur et un amortisseur d'amplitude de pivotement formé par la liaison entre le tourillon 13 et la garniture 14.

Il y a lieu de noter, en outre, que la disposition constructive ainsi retenue confère au corps de support 6 une possibilité de déplacement relatif par écrasement radial de la garniture 10.

Le corps de support 6 est associé à un corps de jonction 15 qui peut être constitué, comme représenté au dessin, par un col de cygne 16 prolongé par une sphère ou rotule 17. Il est toutefois évident que des moyens différents peuvent être mis en œuvre pour permettre la liaison et l'attelage avec une contrepartie complémentaire d'un véhicule tracté et, par exemple, qu'il est possible de faire comporter au corps de jonction 15, un œil, un crochet, un cardan, une chape, etc.

Selon l'invention, le corps de jonction 15 s'étend à partir du corps de support 6 à l'opposé du tourillon 13, de manière à faire saillie extérieurement à la structure 2 du véhicule tracteur. De préférence aussi, le corps de jonction 15 est situé sur un même axe que le tourillon 13.

Dans une forme de réalisation préférée, le corps de jonction 15 est constitué par une pièce indépendante s'étendant à partir d'une semelle 18 qui est destinée à être fixée, par des moyens convenables, notamment des boulons 19, à une platine de montage 20 formée par l'extrémité du corps de support 6 opposée au tourillon 13 par rapport à la broche 9. Selon une forme de construction préférée également, la platine 20 est prévue pour s'étendre, lorsque le support d'attelage est adapté sur un véhicule tracteur, de façon sensiblement perpendiculaire, de manière que les organes de fixation 19 travaillent à la traction. Dans un tel cas, il est avantageux que le corps de support 6 soit monté sur le corps d'adaptation 1 et que ce dernier soit fixé sur la structure du véhicule tracteur, de telle manière que la platine 20 soit tout au plus située de niveau avec la structure extrême du véhicule 2. Ainsi, lorsque cela est souhaité, il est possible de démonter le corps de jonction 15, de manière que le support de l'attelage ne comporte plus alors aucune partie saillant au-delà du gabarit du véhicule. L'enlèvement possible et rapide de cet organe, ordinairement saillant sur les constructions traditionnelles, permet de supprimer les risques d'accident soit physique, soit matériel.

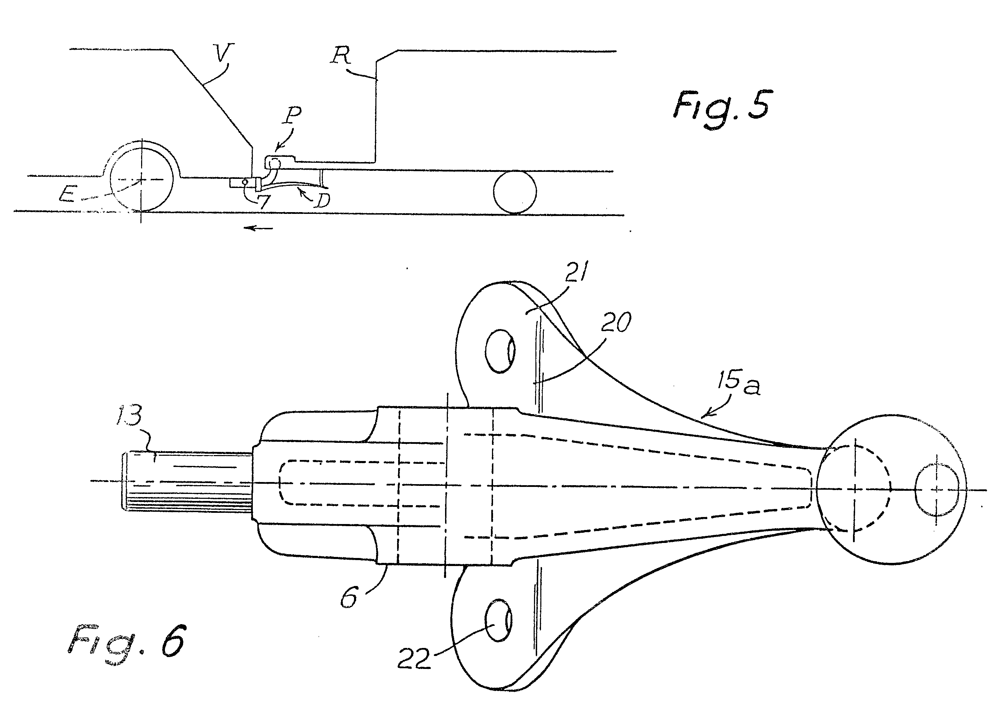

La fig. 4 montre qu'il est possible également d'envisager la réalisation du corps de support 6, de telle manière que la platine 20 s'étende horizontalement pour recevoir et maintenir un corps de jonction 15 par l'intermédiaire d'organes de fixation, tels que les boulons 19, travaillant alors au cisaillement.

Outre l'avantage ci-dessus de suppression de la partie normalement saillante, le support d'attelage, conforme à l'invention, présente un pivot d'articulation 7 qui, associé à l'emboîtement 8, réalise un montage et une adaptation souple et amortie dudit corps par rapport au corps d'adaptation 1. Il en résulte que, lors de la traction d'un véhicule tracté, les efforts alternés qui sont appliqués dans la direction de traction mais aussi dans le plan vertical passant par cette direction, sont en partie au moins absorbés par la déformation élastique des garnitures 10 et 14 qui ont pour fonction d'écrêter les valeurs de pointe et, par conséquent, de supprimer les à-coups extrêmes normalement transmis, par un attelage rigide, aux points d'ancrage sur le véhicule tracteur. Il en résulte une réduction de la fatique imposée aux organes d'ancrage et, par conséquent, l'abaissement du risque de rupture.

L'ecrêtement des valeurs de pointe des efforts alternés perment également de conférer des conditions de conduite moins difficiles pour le conducteur du véhicule tracteur et de réduire, en conséquence, la fatigue qui en découle.

Un autre aspect de l'invention réside dans le fait que la structure particulière et la liaison prévue entre le corps de support 6 et le corps d'adaptation 1 permettent de déplacer le point d'application des efforts alternés, de la liaison P, entre les organes complémentaires attelés du véhicule tracteur V et du véhicule tracté R, au pivot 7, c'est-à-dire en direction de l'essieu E du véhicule tracteur. Il en résulte une réduction d'autant du bras de levier et, par conséquent, une meilleure stabilité du véhicule tracteur qui offre ainsi des conditions de conduite plus sûres et moins fatiguantes.

Cet avantage est également atteint lorsque le dispositif d'attelage, selon l'invention, est utilisé en liaison avec un dispositif de stabilisation ou de répartition de charges D visant, comme dans l'exemple schématisé à la fig. 5, à reporter partiellement la charge du niveau du point de jonction à l'essieu arrière. A cet effet, selon une disposition de l'invention, la platine 20 est réalisée pour comporter deux oreilles 21 s'étendant latéralement au corps de support 6 et présentant des trous 22 pour le passage et la mise en place des organes 19 qui peuvent aussi être utilisés pour assurer le montage d'un dispositif répartiteur de charges D et, notamment, des bras latéraux de pré-tension.

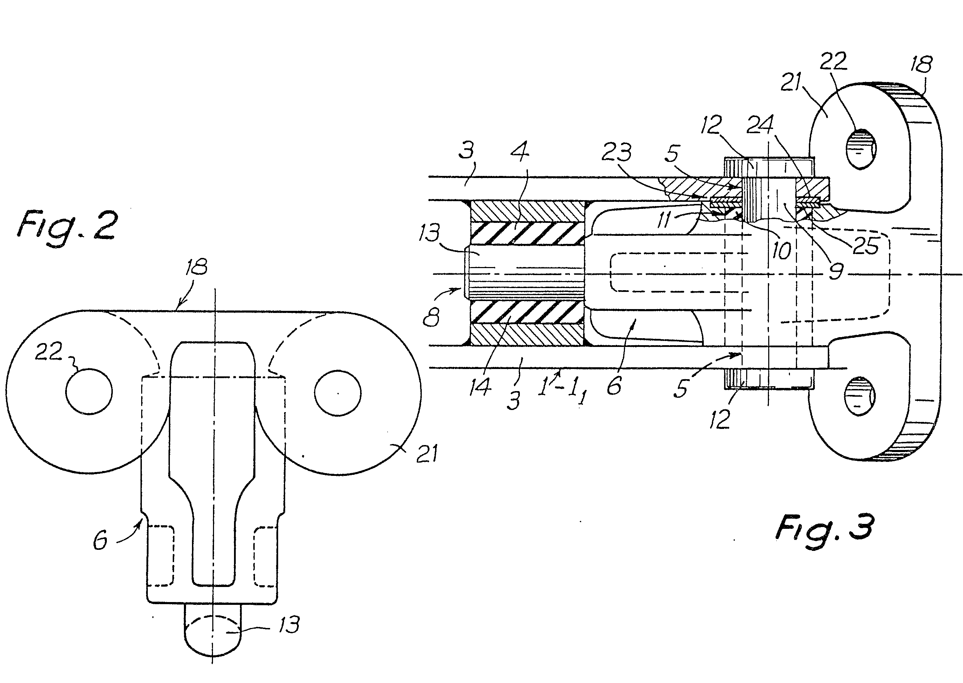

La fig. 3 montre que le point du pivot 7 peut être associé supplémentairement à un ou plusieurs amortisseurs d'amplitude et de pivotement 23 agissant par friction. Un tel amortisseur peut, par exemple, être constitué, au niveau des deux interfaces entre les flasques 3 et les côtés correspondants du corps de support 6, par deux plaques de friction 24 et 25 appliquées relativement l'une contre l'autre pour chaque côté, par exemple, par l'intermédiaire d'une mise sous tension par la broche 9.

La fig. 1 montre, en traits mixtes, que les parties terminales 9a de la broche 9 peuvent être exentrées par rapport au segment médian, de telle manière que, par rotation après mise en place, il soit possible de soumettre la garniture 10 à une précontrainte supprimant les jeux de montage responsables de battements alternés indésirables.

La fig. 6 illustre une autre vairante de réalisation selon laquelle le corps de jonction 15a prolonge le corps du support 6 en faisant partie intégrante de ce dernier. Dans un tel cas, la platine 20 est formée en dessous du corps de jonction 15 pour permettre, par l'intermédiaire des oreilles 21, la mise en place des organes de pré-contrainte latéraux d'un stabilisateur et/ou répartiteur de charges.

Il peut être envisagé de réaliser le corps de jonction 15a sous une forme initiale indépendante et assurer éventuellement une liaison avec le corps de support 6, par exemple, par soudure au moment de la constitution du support de l'attelage propre à un type de véhicule tracteur. Ceci permet, notamment, de conférer, si besoin est, une orientation angulaire propre du corps de jonction 15a par rapport à l'axe géométrique joignant le tenon 13 et l'axe de la broche 9.

## Revendications

1. Support d'attelage pour véhicule tracteur du type automobile comprenant un corps d'adaptation (1) et un corps de support (6) d'un corps de jonction (15), ce sorps de support (6) étant associé au corps d'adaptation (1) par deux points de liaison déformables élastiquement, respectivement formés par un pivot de direction horizontale (7) associé à au moins une garniture déformable (10) et par un emboîtement d'axe (8) général parallèle à l'axe de traction du véhicule et perpendiculaire à l'axe du pivot, caractérisé en ce que:
- le pivot est formé par une broche (9) montée, par ses parties terminales, dans des paliers (5) du corps d'adaptation (1) et engagée, par sa partie médiane, dans une garniture cylindrique (10) déformable élastiquement, occupant un logement (7) présenté par le corps de support (6),
- l'emboîtement est constitué par un tenon (13), prolongeant le corps de support (6) à l'opposé du corps de jonction (15) et engagé à l'intérieur d'une garniture (14) déformable élastiquement occupant un logement (4) présenté par le corps d'adaptation.

2. Support d'attelage selon la revendication 1, caractérisé en ce que la broche (9) comporte, dans sa partie médiane, un segment exentré (9a) de précontrainte de la garniture (10).

3. Support d'attelage selon la revendication 1 ou 2, caractérisé en ce que le pivot est associé à un amortisseur d'amplitude du type à friction (23) constitué par des plaques (24-25) interposées entre les faces en regard des corps d'adaptation (1) et de support (6).

4. Support d'attelage selon la revendication 1, caractérisé en ce que le corps de support (6) forme une platine (18) à partir de laquelle s'étend le corps de jonction (15) et qui délimite deux oreilles latérales (21) de montage d'organes de stabilisation.

5. Support d'attelage selon la revendication 1, caractérisé en ce que le corps de jonction (15) fait partie intégrante du corps de support (6).

6. Support d'attelage selon la revendication 1, caractérisé en ce que le corps de jonction (15) est rapporté de façon amovible sur le corps de support.

7. Support d'attelage suivant la revendication 1, caractérisé en ce que le corps d'adaptation (1) est constitué par deux flasques (3) délimitant les paliers (5) pour le pivot, reliés entre eux au moins par une entretoise (4) délimitant le logement pour la garniture élastique (14) de l'emboîtement et comportant des moyens de liaison avec un véhicule tracteur.

8. Support d'attelage suivant la revendication 1, caractérisé en ce que le corps d'adaptation (1) est constitué par un boîtier (11) formant deux ailes parallèles (3) délimitant les paliers (5) du pivot, retenant la garniture élastique (14) de l'emboîtement et comportant des moyens d'assemblage sur le véhicule tracteur.

## Patentansprüche

1. Kupplungshalterung für Zugfahrzeuge, insbesondere Kraftfahrzeuge, mit einem Anpasskörper (1) und einem Tragkörper (6) eines Verbindungsglieds (15), wobei der Tragkörper (6) mit dem Anpasskörper (1) durch zwei elastisch verformbare Verbindungspunkte verbunden ist, die durch einen waagerechten Bolzen (7) mit wenigstens einem verformbaren Futter (10) bzw. durch eine Steckverbindung (8) mit zur Zugachse des Fahrzeugs paralleler und zur Achse des Bolzens senkrechter Gesamtachse, dadurch gekennzeichnet,
- dass der Bolzen durch einen Dorn (9) gebildet ist, der mit seinen Endteilen in Lagern (5) des Anpasskörpers (1) und mit seinem Mittelteil in einem elastisch verformbaren zylindrischen Futter (10) gelagert ist, das einen im Tragkörper (6) gebildeten Sitz einnimmt, und
- dass die Steckverbindung durch einen Zapfen (13) gebildet ist, der den Tragkörper (6) gegenüber dem Verbindungsglied (15) verlängert und in ein elastisch verformbares Futter (14) eingesetzt ist, das einen durch den Anpasskörper gebildeten Sitz einnimmt.

2. Kupplungshalterung nach Anspruch 1, dadurch gekennzeichnet, dass der Dorn (9) in seinem Mittelteil einen exzentrischen Abschnitt (9a) zur Vorspannung des Futters (10) aufweist.

3. Kupplungshalterung nach Anspruch 1 oder 2, dadurch gekennzeichnet, dass der Bolzen mit einem Amplituden-Reibungsdämpfer (23) aus Platten (24, 25) verbunden ist, die zwischen den einander gegenüberliegenden Flächen des Anpasskörpers (1) und des Tragkörpers (6) angeordnet sind.

4. Kupplungshalterung nach Anspruch 1, dadurch gekennzeichnet, dass der Tragkörper (6) eine Platte (18) bildet, von der aus sich das Verbindungsglied (15) erstreckt und die zwei seitliche Ansätze (21) für den Anbau von Stabilisierungsorganen bildet.

5. Kupplungshalterung nach Anspruch 1, dadurch gekennzeichnet, dass das Verbindungsglied mit dem Tragkörper (6) einstückig verbunden ist.

6. Kupplungshalterung nach Anspruch 1, dadurch gekennzeichnet, dass das Verbindungsglied am Tragkörper abnehmbar befestigt ist.

7. Kupplungshalterung nach Anspruch 1, dadurch gekennzeichnet, dass der Anpasskörper (1) aus zwei die Lager (5) für den Bolzen bildenden Flanschen (3) besteht, die durch wenigstens ein Abstandsstück (4) miteinander verbunden sind, das den Sitz für das elastische Futter (14) der Steckverbindung bildet und eine Verbindungseinrichtung mit dem Zugfahrzeug aufweist.

8. Kupplungshalterung nach Anspruch 1, dadurch gekennzeichnet, dass der Anpasskörper (1) durch ein Gehäuse (11) mit zwei die Lager (5) des Bolzens bildenden Schenkeln (3) gebildet ist, die das elastische Futter (14) der Steckverbindung halten und eine Einrichtung zum Anbau am Fahrzeug aufweisen.

**Claims**

1. Attachment support for towing vehicle of the motorcar type comprising an adjustment body (1) and a member (6) supporting a connecting element (15), said supporting member (6) being associated to the adjustment body (1) by two elastically deformable connecting points respectively formed by a horizontally directed pivot (7) associated to at least one deformable sheath (10) and by a joint (8) of general axis parallel to the traction axis of the vehicle and perpendicular to the pivoting axis, characterised in that:

– the pivot is formed by a pin (9) mounted by its end portions, in bearings (5) of the adjustment body (1) and engaged by its middle portion in an elastically deformable cylindrical sheath (10) fitting inside a housing (7) provided in the supporting member (6),

– the joint is constituted by a tenon (13), which extends the supporting member (6) on the side opposite the connecting element (15) and engages inside an elastically deformable sheath (14) fitting inside a housing (4) provided in the adjustment body.

2. Attachment support according to claim 1, characterised in that the pin (9) comprises in its middle part, a sheath (10) pre-stressing eccentric segment (9a).

3. Attachment support according to claim 1 or 2, characterised in that the pivot is associated to a friction type amplitude absorber (23) constituted by plates (24-25) interposed between the opposed faces of the adjustment body (1) and of the supporting element (6).

4. Attachment support according to claim 1, characterised in that the supporting element (6) forms a platen (18) from which platen extends the connecting element (15) and which defines two side lugs (21) for mounting stabilizing members.

5. Attachment support according to claim 1, characterised in that the connecting element (15) is an integral part of the supporting member (6).

6. Attachment support according to claim 1, characterised in that the connecting element (15) is removably built on the supporting member.

7. Attachment support according to claim 1, characterised in that the adjustment body (1) is constituted by two bearing plates (3) defining the bearings (5) for the pivot, which bearing plates are interconnected by at least one cross-member (4) defining the housing for the elastic sheath (14) of the joint and comprising means connecting it with a towing vehicle.

8. Attachment support according to claim 1, characterised in that the adjustment body (1) is constituted by a casing (11) forming two parallel wings (3) defining the bearings (5) of the pivot, holding in the elastic sheath (14) of the joint and comprising means for the connection with the towing vehicle.

Fig. 4

Fig.1

Fig. 2

Fig. 3

2/3

0 028 991

Fig. 5

Fig. 6